# EUROPEAN PATENT APPLICATION

(11) **EP 0 808 746 A2**
(43) Date of publication of application: **26.11.1997**
(21) Application number: 96830596.1
(22) Date of filing: 27.11.1996
(51) Int. Cl.: B60N 2/44

(54) **Lumbar supporting member for a motor-vehicle seat backrest**

(30) Priority: 20.05.1996 IT TO960422
(71) Applicant: LEAR CORPORATION ITALIA S.p.A., 10128 Torino (IT)
(72) Inventor: Dal Monte, Antonio, 00196 Roma (IT)
(74) Representative: Notaro, Giancarlo

(57) **Abstract**

There is described a lumbar supporting member for the backrest of a motor-vehicle seat, which is constituted by a panel (5) including two side wings (3) pivotally connected to a central element (2) around two axes (7) which are spaced apart from each other.

## Description

The present invention relates to lumbar supporting members for motor-vehicle seat backrests, of the type having the shape of a panel including two side wings having a transverse width increasing towards the ends thereof, which are pivotally connected to each other and are provided with means for connection thereof to two side portions of a frame of a seat backrest.

A lumbar supporting member of the above indicated type is disclosed in European patent EP-B-0 420 824. In the solution shown in this prior reference, the two side wings of the panel are pivotally connected to each other around an axis arranged at the centre of the panel, and provide the panel with a general "butterfly"-shape configuration.

A further evolution of this butterfly element is shown in European patent application EP-A-0 537 839 in which the butterfly element is constituted by a single piece of plastic material including a central strip of reduced width joining the two side wings of the panel, said strip being deflectable so as to define a theoretical axis of mutual articulation of the two wings, said axis being located at the centre of the panel.

The object of the present invention is that of further improving the known lumbar supporting members which have been described above while allowing a better adaptation to the back of the occupant of the seat.

According to its main feature, the present invention achieves said object in that said panel includes a central element interposed between said two side wings which is pivotally connected to the latter respectively around two axes which are spaced apart from each other.

In a preferred embodiment, the panel is constituted by a single element of plastic material including two strip portions connecting said central element to said two side wings, said strip portions being deflectable so as to define said two articulation axes which are spaced apart from each other.

In a first embodiment, the panel has a transverse width which is minimum at the central element and increases progressively towards the ends of the side wings.

In a second embodiment, the central element has an upper portion extending upwardly and provided at its upper end with means for connection to an upper cross-member of a backrest frame of the seat.

Due to this feature, this embodiment is able to provide also a support throughout the whole length of the back of the occupant of the seat.

Preferably, moreover, said upper portion is tapered upwardly. Due to this feature, said upper portion is arranged between the two scapulae of the occupant of the seat and therefore it does not exert a pressure thereon, which condition is desirable in order to obtain a good seating comfort. In particular, by allowing the scapulae to freely move and not to be subjected to an excessive pressure by the backrest, those posture conditions are avoided which give raise to numbnesses and achings of the side parts of the back located immediately below the shoulders.

Yet in said embodiment, said upper portion has at its upper end two side wings provided with said means for connection to the upper cross-member of the backrest frame. In the preferred embodiment, wherein the whole panel is constituted by a single element of plastic material, said connection means can be in form of curved appendages able to snap engage over the cross-member of the frame.

In a further embodiment, said central element also has a lower portion able to provide a support for the upper portions of the glutei of the seat occupant.

The side wings of the panel of the supporting member according to the invention can be connected to the side portions of the backrest frame in any known way, for example as illustrated in the above identified European patent EP-B-0 420 824, by spring means which allow the panel to be adapted to the shape of the occupant of the seat. It is further possible to provide flexible cable control means for varying the arching degree of the panel.

Further features and advantages of the invention will become apparent from the description which follows with reference to the annexed drawings, in which:
- figure 1 is a front diagrammatic view of a backrest frame of a motor-vehicle seat, provided with a first embodiment of the lumbar supporting member according to the inventions,
- figure 2 is a variant of figure 1, which shows a second embodiment of the supporting member according to the invention,
- figure 3 shows the application to the embodiment of figure 2 of a flexible cable control device for adjusting the arching of the lumbar supporting member according to the invention,
- figures 4, 5 show in a cross-sectional view taken along line IV-IV of figure 3, at an enlarged scale, two different operative conditions.

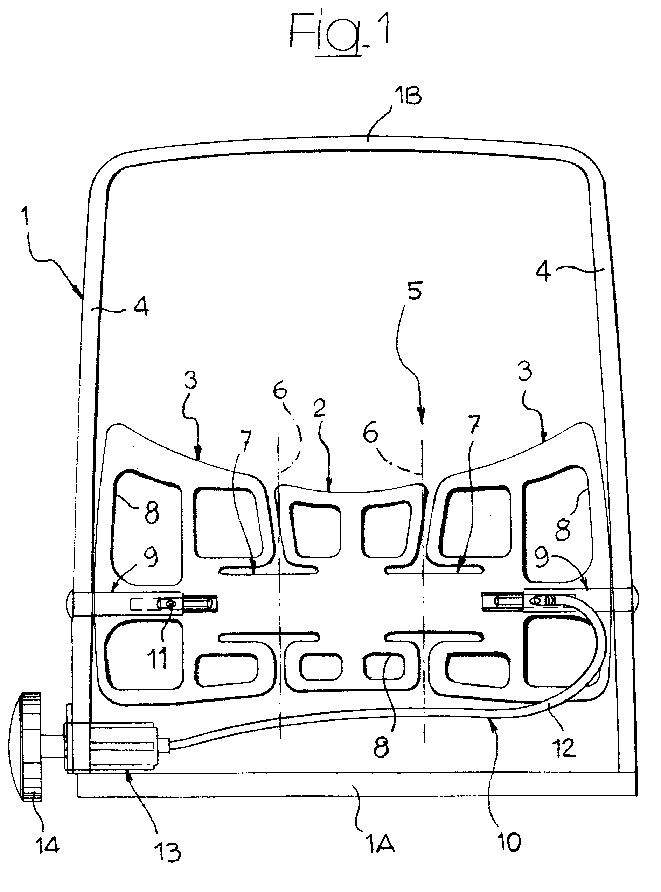

In figure 1, reference numeral 1 generally designates the backrest frame of a motor-vehicle seat, comprising a lower cross-member 1A and an upper cross-member 1B connected to each other by two side uprights 4.

At the lower part of the backrest, between the two uprights 4 there is arranged a lumbar supporting member 5 according to the present invention which, in the illustrated example, is constituted by a single panel of plastic material, with a relatively thin shape, comprising a central element 2 and two side wings 3 having a transverse width increasing towards the ends thereof so as to provide the whole panel with a general configuration substantially similar to the butterfly configuration of the solutions known from the prior references EP-B-0 420 824 and EP-A-0 537 839.

The main difference with respect to the prior solutions lies in that the panel 5, instead of being constituted only by the two side wings 3 (which in the known solutions were articulated to each other around a central axis of the panel) also comprises the central element 2 which is pivotally connected to the two side wings 3 around two articulation axes 6 which are space apart from each other. Due to this feature, the panel according to the invention is able to provide a better adaptation to the configuration of the back of the seat occupant.

As shown in figure 1, in the embodiment shown, wherein the panel 5 is in one piece of plastic material, the central element 2 is connected to the two side wings 3 by two strip portions 7 which are deflectable so as to define two theoretical articulation axes 6. The central element 2 and the side wings 3 are further provided with apertures 8 for decreasing the weight.

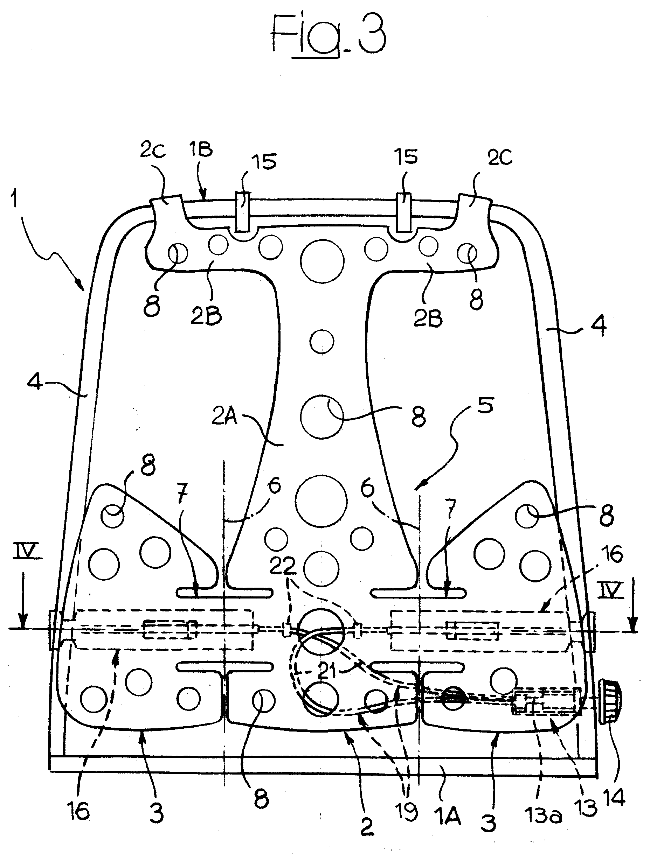

The side wings 3 are connected to the side uprights 4 of the backrest frame in any known way, for example as shown in document EP-B-0 420 824, or by means of two oscillating supports 9 having their opposite ends respectively connected pivotally to the respective upright 4 and the respective wing 3 of panel 5. The details of construction of these oscillating supports will be described hereinafter with reference to the embodiment of figure 3.

The panel 5 can be simply connected to the backrest frame so that it can be adapted to the configuration of the back of the seat occupant, or it can be provided, in a way known per se, with a flexible cable device which can be activated manually for adjusting the degree of arching of the panel. Figure 1 shows a control device of known type, comprising a flexible cable transmission 10 including a flexible cable with one end 11 anchored to a wing 3 of panel 5, and a sheath 12 whose end is anchored to the other wing. This transmission is connected to a device 13 of a type known per se, able to transform the rotational movement imparted by a knob 14 into a linear movement of the cable with respect to its sheath 12. As indicated already, the embodiment shown in figure 1 is provided with a device for adjusting the arching of the panel, which is known per se. Preferably, however, the panel according to the invention is provided with a arching control device which is of the type which will be described hereinafter with reference to figures 3-5.

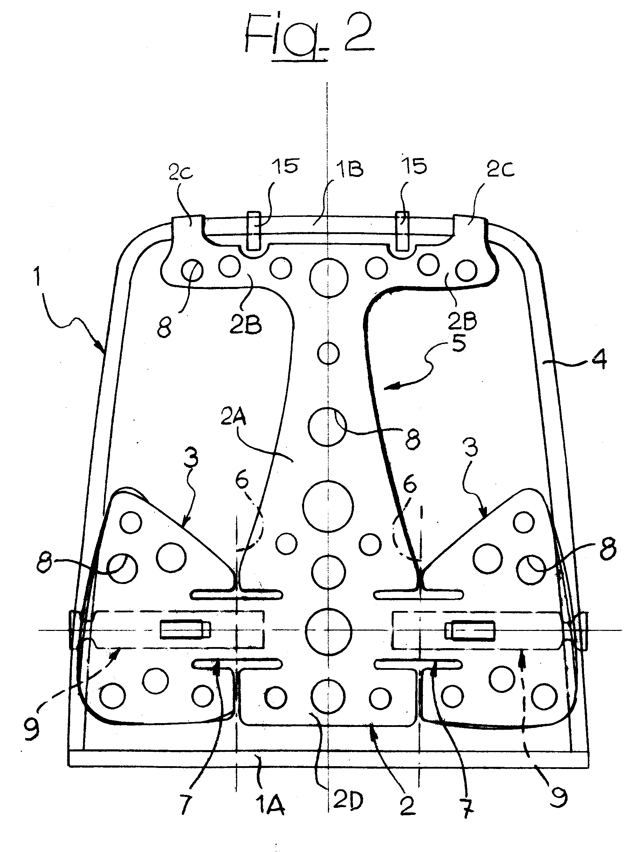

Figure 2 shows a variant of figure 1, in which the central element 2 has an upper portion 2A, tapering upwardly and having an upper end with two side wings 2B each provided with a curved appendage 2C able to snap engaged the cross-member 1B of the backrest frame, on the outside with respect to the two tubes 15 serving for guiding the stems which support the seat headrest. In this manner, as already indicated above, the upper portion 2A provides a suitable support to the back of the seat occupant throughout the whole length thereof while it is arranged between the two scapolari areas, thus leaving some freedom of movement to the scapulae and hence avoiding the application of an excessive pressure at these areas, with the resulting advantages which have been indicated above. The central element 2 also has a lower portion 2D extending downwardly so as to provide a support for the upper portions of the glutei of the seat occupant. This portion is provided with a very reduced thickness, so as to provide an elastic return able to favour a proper adaptation of the backrest to the various body shapes which, at this area of the body, may greatly vary from one person to the other.

According to the invention it is also possible to provide a solution (not shown) in which the lower portion 2D extends up to the lower cross-member 1A of the backrest frame 1 and is connected thereto, so as to provide the whole supporting member with a general configuration with four lobes.

In figures 3-5 there is shown a preferred embodiment of the control device for arching the panel at the lumbar area. As already indicated above, the panel according to the invention may have no adjustment device and be simply connected to the backrest frame so as to be adapted to the configuration of the back of the seat occupant. However, it is possible, and sometimes preferable, to provide the panel with a device for controlling positively the degree of arching of the panel. Figures 3-5 show a particular embodiment of said control device.

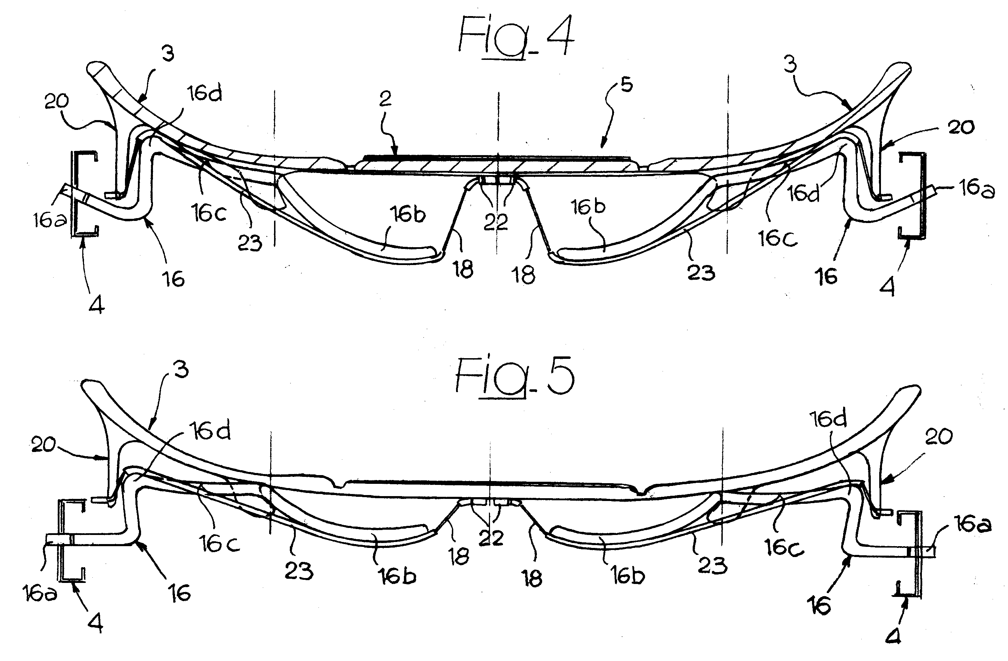

With reference to figures 3, 4, side wings 3 of the panel are connected to the side uprights 4 of the backrest frame by means of two oscillating arms 16 each having one end 16a pivotally connected to the respective side upright 4, each arm being also pivotally connected to a rear appendage 17 of the respective side wing 3. Each oscillating arm 15 further has one end portion 16b, extending beyond the respective appendage 17, serving for supporting the respective flexible cable transmission, as shown in the following.

With reference to figure 3, on one side of the backrest frame there is mounted a device 13 of any known type, able to transform the rotational movement of a knob 14 (naturally it would be possible also to provide a control by an electric motor) into a simultaneous linear movement of the two flexible cables 18 (see also figure 4) of two flexible cable transmissions 19. Each flexible cable transmission includes said flexible cable 18, whose ends are respectively connected to the moving element 13a of device 13 and a rear appendage 20 (figure 4) of the respective wing 3; each flexible cable transmission 19 further comprises a sheath 21 having one end connected to the fixed body of device 13 and the opposite end anchored at 22 to the central element of the supporting member (see figures 3, 4). As shown in figure 4 and in figure 5, the flexible cable transmission further comprises a further sheath portion 23 which guides each flexible cable 18 behind the end portion 16b of each oscillating arm 16, through an aperture 16c formed through an intermediate area of arm 16 and in front of a elbow-shaped portion 16d of this arm. As a result of this arrangement, by applying a tension to the flexible cable transmissions 19, the two oscillating arms 16 tend to move from the condition shown in figure 4 to the condition shown in figure 5, which is more arched. By loosening the tension on the cable, the pressure applied by the back of the occupant returns the panel to the less arched condition shown in figure 4.

The control device which has been described above is able to vary the arching of the panel according to the invention at the lumbar area in a particularly simple and efficient way. The whole unit constituted by the panel and the control device can be assembled preliminarily and then mounted on the backrest frame of the seat by a single operation. This assembling operation can be carried out extremely rapidly and easily, since it does not require the addition of any further piece.

The number of pieces constituting the unit is extremely reduced, since, apart from the lumbar-back support 5 only one further piece of plastic material is provided, since the two oscillating arms 16 are identical to each other. The system according to the invention does not involve rear contact problems, i.e. it does not have crests or elements with a low curvature radius which can be a danger for the passengers seating on the rear seats of the motor-vehicle or anyhow can be unacceptable under the prevailing rules.

Finally, the system according to the invention enables the thickness of the padding of foamed plastic material of the backrest to be greatly reduced.

The system for moving the lumbar support which has been described above enables a particularly relevant displacement at the wings 3, so as to avoid that the strong holding action exerted by the backrest covering clothes prevents the wings from advancing, which with reduce the concavity, i.e. the ability of the backrest to rap around the back of the occupant. This feature is also a great advantage with respect to the known systems which have been described above.

The use of two parallel cables enables the necessary movement of the cables to be greatly reduced, with respect to a solution using a single cable connecting the two side wings to each other.

The curved shape of arms 16, which are preferably made of plastic material, together with the two rear crests 20 of side wings 3, which also are of plastic material, enables the flexible cable to be efficiently guided. One of the reasons of the curved shape of the oscillating arms 16 of plastic material is that of exploiting the elastic properties of the material so that these arms may also fulfil the function of springs, so as to replace the springs which for example are used in the system known from document EP-B-0 420 824.

Summing up, the control device which has been described above is extremely simpler and more efficient with respect to the previously proposed solutions.

It is to be noted in particular that in the known solutions the assembling of the flexible cable transmission is carried out after that the lumbar support has been fixed to the backrest frame. In the case of the present invention, instead, the whole unit, including the flexible cables, is assembled preliminarily and then mounted by a single operation on the backrest by simply inserting the two ends 16a of the oscillating arms 16 within the respective seats on the uprights 4 of the backrest frame.

Due to the use of the plastic material, furthermore, the system is totally free from noise and cigolii which are usually present when metal elements are used.

Naturally, while the principle of the invention remains the same, the details of construction and the embodiments may widely vary with respect to what has been described and illustrated purely by way of example, without departing from the scope of the present invention.

## Claims

1. Lumbar supporting member for a motor-vehicle seat backrest, said member being in form of a panel (1) including two side wings (3) having a transverse width increasing towards the ends thereof, said wings being pivotally connected to each other and being provided with means for connection thereof to two side portions (4) of the backrest frame (1),
characterized in that said panel (5) includes a central element (2) interposed between said two side wings (3) and pivotally connected to the latter respectively around two axes (6) which are spaced apart from each other.

2. Lumbar supporting member according to claim 1, characterized in that it is constituted by a single element of plastic material including two strip portions (7) connecting said central element (2) to said two side wings (3), said strip portions (7) being deflectable so as to define said two articulation axes (6).

3. Lumbar supporting member according to claim 1, characterized in that the panel (5) has a transverse width which is minimum at the central element (2), this transverse width increasing progressively towards the ends of the side wings (3).

4. Lumbar supporting member according to claim 1, characterized in that the central element (2) includes an upper portion (2A) extending upwardly and provided at its upper end with means (2C) for connection to an upper cross-member (1B) of the backrest frame (1).

5. Lumbar supporting member according to claim 1, characterized in that said upper portion (2A) is tapered upwardly, so as not to cover the areas corresponding to the scapulae of the seat occupant.

6. Lumbar supporting member according to claim 5, characterized in that the upper end of said upper portion (2A) of the central element (2) is provided with two side wings (2B) each having at least one curved appendage (2C) which can be connected to the upper cross-member (1B) of the backrest frame.

7. Lumbar supporting member according to claim 1, characterized in that the central element (2) has a lower portion (2D) extending downwardly, so as to form a support for the upper portions of the glutei of the seat occupant.

8. Lumbar supporting member according to claim 1, characterized in that the side wings (3) are connected to the side uprights (4) of the backrest frame by two oscillating arms (16) pivotally connected both to the uprights (4) and the side wings (3).

9. Lumbar supporting member according to claim 8, characterized in that said oscillating arms (16) are made of plastic material.

10. Lumbar supporting member according to claim 8, in which a control device for arching the panel is provided, characterized in that it includes two flexible cable transmissions (19) which can be actuated simultaneously by a control knob (14), said transmissions being guided between the central element (2), the side wings (3) and the two oscillating arms (16) so that by applying a tension to said flexible cable transmissions. the arching of the side wings (3) with respect to the central element (2) is increased.
